(19) Europäisches Patentamt
European Patent Office
Office européen des brevets

(11) Veröffentlichungsnummer: **0 176 835**
**A2**

(12) **EUROPÄISCHE PATENTANMELDUNG**

(21) Anmeldenummer: 85111591.5

(22) Anmeldetag: 13.09.85

(51) Int. Cl.[4]: C 08 G 69/26
C 08 G 69/00

(30) Priorität: 26.09.84 DE 3435202

(43) Veröffentlichungstag der Anmeldung:
09.04.86 Patentblatt 86/15

(84) Benannte Vertragsstaaten:
BE CH DE FR GB IT LI

(71) Anmelder: BAYER AG
Konzernverwaltung RP Patentabteilung
D-5090 Leverkusen 1 Bayerwerk(DE)

(72) Erfinder: Nielinger, Werner, Dr.
Bärenstrasse 21
D-4150 Krefeld(DE)

(72) Erfinder: Stix, Wolfgang, Dr.
Freudenbergstrasse 56 b
D-6901 Neckarsteinach(DE)

(72) Erfinder: Bottenbruch, Ludwig, Dr.
Wöhlerstrasse 5
D-4150 Krefeld 1(DE)

(54) **Polyamide gegen Lichteinwirkung stabilisiert.**

(57) Thermoplastische Polyamide mit verbesserter Stabilität gegen Molekulargewichtsabbau bei Lichteinwirkung, die als Endgruppen Dimethylmaleinimide aufweisen.

EP 0 176 835 A2

Croydon Printing Company Ltd.

0176835

BAYER AKTIENGESELLSCHAFT 5090 Leverkusen, Bayerwerk

Konzernverwaltung RP
Patentabteilung Str/Kü-c

## Polyamide gegen Lichteinwirkung stabilisiert

Die vorliegende Erfindung betrifft Polyamide, die gegen Molekulargewichtsabbau durch Einwirkung von Licht stabilisiert sind.

In der DOS 2 626 769 sind Polymere mit reaktiven Gruppen beschrieben, die unter dem Einfluß elektromagnetischer Wellen vernetzen. Durch Belichten von daraus hergestellten Folien kann man reliefartige Bilder erzeugen, indem man nach der Belichtung die unbelichteten und somit unvernetzten Polymeranteile herauslöst.

Die Polymeren haben ein Durchschnittsmolekulargewicht von wenigstens 1000. Als reaktive Gruppen enthalten sie im Mittel mehr als zwei Maleinimidgruppen im Molekül, wobei solche der Formel

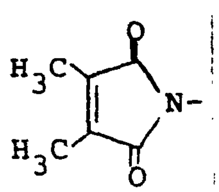

ganz besonders bevorzugt werden.

Die vernetzbaren Polyamide werden gemäß DOS 2 626 769 erhalten, indem man ein Diamin mit einer Mischung aus einem oder mehreren Dicarbonsäurechloriden und einem bestimmten Anteil 5-Dimethylmaleinimidylbenzol-1,3-dicarbonsäuredichlorid polykondensiert, wobei Moleküle mit mehreren seitenständigen Maleinimidresten entstehen, die bei der Belichtung vernetzen.

Um aber auch nach der Belichtung noch unvernetzte Produkte zu erhalten, ist es naheliegend, Polyamide mit im Mittel einer Maleinimidgruppe im Molekül herzustellen, indem man bei der Polykondensation das monofunktionelle Carbonsäurechlorid, nämlich 4-Dimethylmaleinimidylbenzol-carbonsäurechlorid verwendet. Bei diesen Polyamiden tritt aber nicht, wie erwartet, nach der Belichtung ein Molekulargewichtsaufbau ein, sondern es wird der bekannte Abbau unter Lichteinwirkung beobachtet.

Überraschenderweise wurde nun gefunden, daß der Molekulargewichtsabbau nicht eintritt, wenn man monofunktionelle Dialkylmaleinimidsäurechloride bei der Herstellung von Polyamiden verwendet, die am Imido-Stickstoff mit einer Alkylgruppe substituiert sind.

Gegenstand der Erfindung sind daher thermoplastische Polyamide mit Maleinimid Endgruppen der allgemeinen Formel I

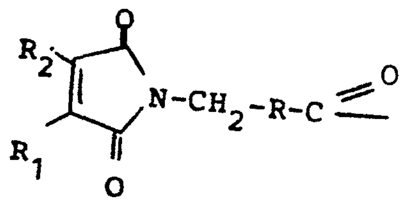

I

worin

R eine Bindung, einen Alkylenrest mit 1 - 5 vorzugsweise 1-2 C-Atomen, einen Cycloalkylenrest mit $C_5$-$C_{10}$, vorzugsweise $C_6$-$C_8$, besonders bevorzugt einen Cyclohexylenrest, oder einen Aryenlrest mit $C_6$-$C_{12}$, vorzugsweise $C_6$-$C_{10}$, besonders bevorzugt einen Phenylenrest bedeuten,

und

$R_1$ und $R_2$ gleich oder verschieden, einen Alkylrest mit $C_1$-$C_4$, vorzugsweise $C_1$-$C_2$, vorzugsweise einen Methylrest bedeuten.

Als Polyamide kommen Polyamide und Copolyamide aus aliphatischen, araliphatischen und aromatischen Diaminen und Dicarbonsäuren in Betracht. Beispiele für geeignete Diamine sind; Tetra-, Hexa-, Hepta-, Octa- und Decamethylendiamin, Dimethyl- und Trimethylhexamethylendiamin, 1,4-Diaminocyclohexan, 1,4-Bisaminomethylcyclohexan, 3-Aminomethyl-3,5,5-trimethyl-cyclohexylamin, Bis-(4-aminocyclohexyl)-methan, Bis-(4-aminocyclohexyl)-propan, Bis-(3-methyl-4-aminocyclohexyl)-methan, 1,3 und 1,4-Bis(aminomethyl)benzol, 1,3- und

1,4-Diaminobenzol, 2,4-Diamonotoluol, 4,4'-Diaminodiphenylmethan, 4,4'-Diaminodiphenylether, 4,4'-Diaminodiphenylsulfon.

Geeignete Dicarbonsäuren sind beispielsweise: Adipinsäure, Azelainsäure, Sebazinsäure, Dodecandicarbonsäure, Cyclohexandicarbonsäure, Isophthalsäure, Terephthalsäure, 4,4'-Diphenyldicarbonsäure, 4,4'-Diphenyletherdicarbonsäure.

Besonders bevorzugt sind amorphe Polyamide.

Die Herstellung der Polyamide erfolgt nach den bekannten Methoden in Lösung oder in der Phasengrenzfläche, ausgehend von Diaminen und Dicarbonsäurechloriden. Die Maleinimidcarbonsäurechloride der Formel II

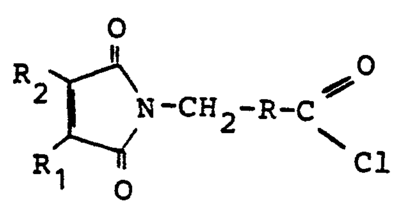

II

worin

R, $R_1$ und $R_2$ die oben genannte Bedeutung haben, werden in Mengen von 0,5-10, vorzugsweise 1-8 Mol-%, bezogen auf das Dicarbonsäuredichlorid, eingesetzt.

Die erfindungsgemäß hergestellten Polyamide können zu lichtstabilisierten Formkörpern, insbesondere Folien, nach bekannten Methoden verarbeitet werden.

Beispiel 1

Zu einer Lösung von 14,53 g (0,125 Mol) Hexamethylendiamin und 8,0 g (0,2 Mol) Natriumhydroxid in 1500 g Wasser tropft man unter intensivem Rühren bei 20-25°C im Verlaufe von 15 Minuten eine Lösung von 20,30 g (0,1 Mol) Isophthalsäuredichlorid und 0,40 g (0,002 Mol) eines Dimethylmaleinimidylcarbonsäurechlorids der Formel

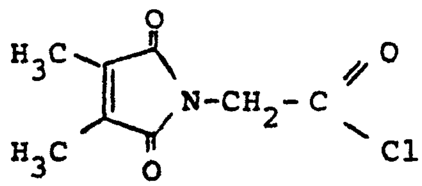

in 375 ml Methylenchlorid. Die Zugabe der Säurechloride erfolgt so, daß zunächst die Mischung aus 75 % des Isophthalsäurechlorids und die Gesamtmenge des Dimethylmaleinimidyl-carbonsäurechlorids, gelöst in 75 % der angegebenen Methylenchloridmenge und danach sofort die übrige Isophthalsäuredichloridlösung zudosiert wird.

Das ausgefallene Polyamid wird zerkleinert, mit Wasser chloridfrei gewaschen und getrocknet.

Ausbeute: 24,1 g.

Die relative Viskosität, gemessen an einer einprozentigen Lösung in m-Kresol in einem Ubbe-Lohde Viskosimeter bei 25°C, beträgt 2,2.

Beispiel 2

Die Herstellung des Polyamids erfolgt, wie in Beispiel 1 beschrieben, jedoch mit 0,43 g (0,002 Mol) eines Dimethylmaleinimidyl-carbonsäurechlorids der Formel

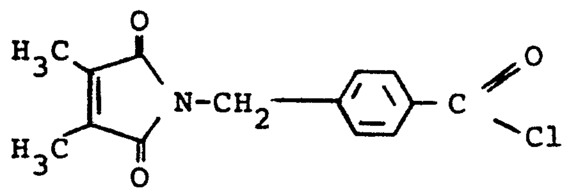

Vergleichsbeispiel 1

Die Herstellung des Polyamids erfolgt, wie in Beispiel 1 beschrieben, jedoch mit 0,41 g (0,002 Mol) eines Dimethylmaleinimidyl-carbonsäurechlorids der Formel

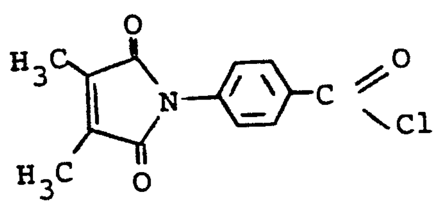

Vergleichsbeispiel 2

Die Herstellung des Polyamids erfolgt wie in Beispiel 1, jedoch mit 1,62 g (0,008 Mol) des Dimethylmaleinimidyl-carbonsäurechlorids gemäß Vergleichsbeispiel 1.

Vergleichsbeispiel 3

Ein Polyamid wird gemäß Beispiel 1, jedoch ohne Zusatz des Dimethylmaleinimidyl-carbonsäurechlorids hergestellt.

Aus einer 20 %igen Lösung der Polyamide in Ameisensäure werden Filme gegossen. Nach Abdampfen des Lösungsmittels beträgt die Filmdicke 50 µm. Diese Filme werden 8 h mit einer Quecksilberdampfhochdrucklampe vom Typ Philips HKP 125 W belichtet, wobei der Abstand des Films von der Lampe 5 cm beträgt. Die relativen Viskositäten, gemessen wie oben angegeben der Filme vor und nach der Belichtung gehen aus der folgenden Tabelle hervor.

| Polyamid | relative Viskosität | |
|---|---|---|
| gemäß | vor Belichtung | nach Belichtung |
| Beispiel 1 | 2,0 | 2,5 |
| Beispiel 2 | 2,9 | 2,8 |
| Vergleichsbeispiel 1 | 2,5 | 2,1 |
| Vergleichsbeispiel 2 | 2,3 | 1,8 |
| Vergleichsbeispiel 3 | 3,6 | 3,1 |

Patentansprüche

1. Thermoplastische Polyamide mit verbesserter Stabilität gegen Molekulargewichtsabbau bei Lichteinwirkung, dadurch gekennzeichnet, daß sie als Endgruppen Dimethylmaleinimide der allgemeinen Formel I

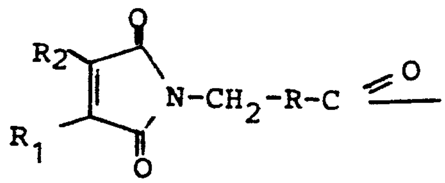

I

wobei

R eine Bindung, einen Alkylenrest mit 1-5 C-Atomen, einen Cycloalkylenrest mit $C_5$-$C_{10}$ einen Arylenrest mit $C_6$-$C_{12}$,

und

$R_1$ und $R_2$ gleich oder verschieden einen Alkylrest mit $C_1$-$C_4$ bedeuten.

2. Polyamide nach Anspruch 1, dadurch gekennzeichnet, daß

R eine Bindung einen Alkylenrest mit 1-2 C-Atomen, einen Cycloalkylenrest mit $C_6$-$C_8$ oder einen Arylenrest mit $C_6$-$C_{10}$ und

0176835

$R_1$ und $R_2$ gleich oder verschieden, einen Alkylrest mit $C_1$-$C_2$ bedeuten.

3. Polyamide nach Anspruch 1 oder 2, dadurch gekennzeichnet, daß R für einen Cyclohexyl- oder Phenylrest und $R_1$ und $R_2$ jeweils für einen Methylrest stehtn.

4. Polyamide nach Ansprüchen 1-3, dadurch gekennzeichnet, daß sie unter Mitverwendung von 0,5-10 Mol-% Maleinimidcarbonsäurechloride der Formel II

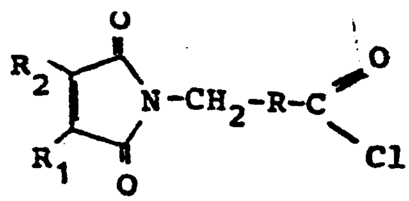

II

worin

R, $R_1$ und $R_2$ die in den Ansprüchen 1-3 angegebene Bedeutung haben,

hergestellt wurden.

5. Polyamide nach Anspruch 4, dadurch gekennzeichnet, daß 1-8 Mol-% Maleinimidcarbonsäurechloride mitverwendet werden.

6. Polyamide nach Ansprüchen 1-5, dadurch gekennzeichnet, daß sie amorph sind.

7. Lichtstabilisierte Formkörper, insbesondere Folien, aus Polyamiden nach Ansprüchen 1-6.